# EUROPÄISCHE PATENTANMELDUNG

(11) **EP 3 979 472 A1**
(43) Veröffentlichungstag der Anmeldung: **06.04.2022**
(21) Anmeldenummer: 20199130.4
(22) Anmeldetag: 30.09.2020
(51) Int. Cl.: H02K 15/00, H02K 3/12, H02K 15/04

(54) **SPULE EINER ELEKTRISCHEN MASCHINE UND MITTEL ZU DEREN HERSTELLUNG**

(71) Anmelder: Siemens Aktiengesellschaft, 80333 München (DE)
(72) Erfinder: Schönbauer, Norbert, 94072 Bad Füssing (DE); Straßinger, Tobias, 94136 Thyrnau (DE); Teringl, Claus, 94060 Pocking (DE); Winklhofer, Michael, 94060 Pocking (DE)
(74) Vertreter: Michalski Hüttermann & Partner Patentanwälte mbB

(57) **Zusammenfassung**

Eine Fertigungsvorrichtung (11) ist für eine Spule (7) vorgesehen, wobei diese zur Umlenkung der Spule (7) dient, wobei für die Umlenkung ein Formkörper (9) vorgesehen ist, wobei der Formkörper (9) einen ersten Abschnitt (17) aufweist, welcher einen Kreisbogen (19) darstellt und einen zweiten Abschnitt (18) aufweist, welche eine Kreissehne (20) darstellt. Bei einem Verfahren zur Herstellung einer Spule (7), wobei die Spule (7) eine Vielzahl von Windungen (8) aufweist, wird die Spule über einen Formkörper (9) gebogen, wobei ein erster Abschnitt (23) ausgebildet wird, welcher einen Kreisbogen (21) darstellt und ein zweiter Abschnitt (24) ausgebildet wird, welcher eine Kreissehne (22) darstellt.

## Beschreibung

Die Erfindung betrifft eine Spule einer elektrischen Maschine bzw. Mittel zur Herstellung einer Spule einer elektrischen Maschine. Die elektrische Maschine weist einen Stator und einen Rotor auf, wobei der Stator Statornuten aufweist, in die eine Statorwicklung eingebracht ist, wobei die Statorwicklung Spulen aufweist.

Statoren bzw. Statorsegmente dynamoelektrischer Maschinen weisen insbesondere in einem geschichteten Blechpaket Spulen auf, um durch elektromagnetische Wechselwirkung mit einem Rotor eine Arbeitsmaschine anzutreiben bzw. durch den angetriebenen Rotor elektrische Energie zu erzeugen. Spulen werden in Nuten eines Blechpakets einer dynamoelektrischen Maschine positioniert.

Die Ausbildung eines Wickelkopfes durch die Spulen (Form- oder Zahnspulen) ist schwierig, insbesondere bei dynamoelektrischen Maschinen großer Leistungsklasse (größer 1 MW). Als Beispiel hierfür seien Generatoren für Windkraftanlagen und Gezeitenkraftwerke genannt, die zur Umwandlung mechanischer Energie in elektrische Energie verwendet werden. Motoren große Leistungen finden sich beispielsweise bei Bahnantrieben, Kompressoren oder Pumpen.

Elektrische Maschinen im höheren Leistungsbereich sind häufig mit so genannten Formspulen ausgeführt, wie sie beispielsweise aus der DE 195 29 970 C1 bekannt sind. Hierbei handelt es sich um vorgeformte Leiterbündel, die mit einem in der Regel streifenförmigen Isoliermaterial umwickelt sind. Zur Herstellung einer Formspule wird üblicherweise zunächst eine Rohspule gewickelt und anschließend derart gespreizt, dass sie in Nuten des Ständers eingelegt werden kann.

Die Spule einer Statorwicklung einer elektrischen Maschine weist beispielsweise eine Anzahl von Windungen auf, die gemeinsam mit einer Anzahl von Schichten eines Glimmerbandes bewickelt sind, auf die wiederum eine Anzahl von Schichten eines Deckbandes gewickelt ist, wobei die Spule als dreidimensionale Formspule ausgebildet ist.

Bei als Formspulen ausgebildeten Spulen ist es bekannt, zunächst eine plane Spule zu fertigen, die aufgrund ihrer Form üblicherweise als race track-Schleife (zwei lange Geraden, die über insbesondere zwei halbkreisförmig gebogene Abschnitte miteinander verbunden sind) bezeichnet wird. Diese Spule wird durch einen Formgebungsprozess in die Formspule umgeformt. Bei Formspulen können beim Spulen ziehen sogenannte Formplatten zur Formung der Wickelköpfe verwendet werden. Jedoch ist dies bei Spulen mit sehr kurzen Wickelköpfen Maschinentechnisch begrenzt nicht mehr möglich, und eine optimale/saubere Wickelkopfform ist nicht mehr gegeben bzw. kann ohne Platten nicht gefertigt werden. Ein weiteres Problem kann sich durch das Ziehen ergeben, wenn sich dadurch die einzelnen Wicklungen einer Spule wieder voneinander beabstanden.

Ausgehend davon ist es eine Aufgabe der Erfindung, ein verbessertes Ziehen der Formspule zu ermöglichen.

Eine Lösung der Aufgabe ergibt sich bei einer Fertigungsvorrichtung nach Anspruch 1. Eine weitere Lösung der Aufgabe ergibt sich bei einem Verfahren nach Anspruch 3. Eine weitere Lösung der Aufgabe ergibt sich bei einem Stator nach Anspruch 8. Ausgestaltungen dieser Lösungen ergeben sich insbesondere nach den abhängigen Ansprüchen 2, 4 bis 7 und 9, bzw. gemäß einer der nachfolgend beschriebenen Variationen von Ausgestaltungen.

Bei einer Fertigungsvorrichtung für eine Spule, zur Umlenkung einer Spule, ist für die Umlenkung ein Formkörper vorgesehen, wobei der Formkörper einen ersten Abschnitt aufweist, welcher einen Kreisbogen darstellt und einen zweiten Abschnitt aufweist, welcher eine Kreissehne darstellt. Der erste Abschnitt und der zweite Abschnitt sind dazu vorgesehen, dass an diesen die Spule beim Biegen geführt ist und die Spule durch das Biegen abschließend an dem ersten Abschnitt und an dem zweiten Abschnitt anliegt. Das Biegen der Spule erfolgt insbesondere in einem Winkel von 180°, also so, dass die Spule in eine erste Nut eines Stators einer elektrischen Maschine eingelegt werden kann und auch in eine weitere Nut eingelegt werden kann. So kann die Spule zu einer Stirnseite des Stators hingeführt werden und nach der Umlenkung von 180° zurückgeführt werden. Die Umlenkung verschiedener Spule auf einer Stirnseite des Blechpaketes des Stators bilden einen Wickelkopf.

In einer Ausgestaltung der Fertigungsvorrichtung ist der erste Abschnitt zum Anlegen der Spule vorgesehen und auch der zweite Abschnitt zum Anlegen der Spule vorgesehen. Der erste Abschnitt und der zweite Abschnitt grenzen aneinander an. Der erste Abschnitt und der zweite Abschnitt haben eine Höhe, die zumindest der Höhe der Spule entspricht.

Durch die Fertigungseinrichtung ergibt sich mit einem Wickeltool (Formkörper) zur Vorformung von Formspulen die Möglichkeit eine kurze Wickelkopflänge zu erzielen. Durch eine verkürzte Wickelkopflänge können kürzere elektrische Maschinen gebaut werden. Dies ist beispielsweise bei Windkraftgeneratoren oder bei Schiffsantrieben vorteilhaft. Durch das Wickeltool (Formkörper) mit den unterschiedlichen Abschnitten zum Anlegen der Spule beim Biegen ist es auch möglich eine Spule derart vorzubiegen, dass bei einem anschließenden Ziehen der Spule in die gewünschte Form des Wickelkopfes sich ein Aufspreizen der Windungen der Spule im Bereich des Wickelkopfes zumindest reduzieren lässt. Durch einen Formkörper (Wickeltool) der nicht rund ist, wie beim Standard wickeln, sondern durch einen Formkörper, der eine Schräge (Kreissehne) aufweist, lässt sich das Ziehen der Spule positiv beeinflussen. Diese Schräge formt den Teil der Spule schon vor dem Ziehen beim Wickeln vor, und ersetzt somit Problemlösungen wie ein Zurechtklopfen von Windungen der Spule. Nach dem Ziehen entspricht die Wickelkopfform insbesondere der einer Spule, die mit Formplatten gefertigt wurde oder gefertigt werden hätte sollen, ohne zusätzlichen Aufwand zu erzeugen.

Nach einem Verfahren zur Herstellung einer Spule, wobei die Spule eine Vielzahl von Windungen aufweist, wird die Spule über einen Formkörper gebogen, wobei ein erster Abschnitt ausgebildet wird, welcher einen Kreisbogen darstellt und ein zweiter Abschnitt ausgebildet wird, welcher eine Kreissehne darstellt. Durch den Formkörper wird also bei der Spule der erste Abschnitt ausgebildet und der zweite Abschnitt ausgebildet. Der erste Abschnitt und der zweite Abschnitt folgen insbesondere unmittelbar aufeinander. Damit formt die Spule die Form des Formkörpers ab.

Gemäß einer Ausgestaltung des Verfahrens weist also der Formkörper einen ersten Formkörper-Abschnitt auf, welcher einen Kreisbogen darstellt und einen zweiten Formkörper-Abschnitt, welcher eine Kreissehne darstellt. Die Form des Formkörpers und die Form der geformten (gebogenen) Spule entsprechen sich.

In einer Ausgestaltung des Verfahrens wird die Spule derart gezogen, dass die Spule im zweiten Abschnitt mit Kreissehnenform, Windungen aufweist, deren Abstand zueinander kleiner ist als ein Abstand zueinander bei einer Kreisbogenform im zweiten Abschnitt. Diese Kreisbogenform im zweiten Abschnitt stellt die bekannte Fertigung dar. Bei der bekannten Fertigung sind also der erste Abschnitt und der zweite Abschnitt als Kreisbogen ausgebildet, wobei beide Kreisbögen einen gemeinsamen Kreisbogen bilden und somit eigentlich keine zwei Abschnitte vorhanden sind und auch nicht bekannt sind. Durch den zweiten Abschnitt mit der Kreissehnenform biegen sich die Windungen der Spule durch das Ziehen also nicht mehr so auf, wie bei einer vorgegebenen Kreisbogenform der Spule vor dem Ziehen. Damit kann der Wickelkopf beispielsweise kompakter ausgeführt werden. Auch die Isolierung der Spule wird im Bereich des Wickelkopfes einfacher.

In einer Ausgestaltung des Verfahrens wird durch die Spule durch das Ziehen im Bereich des Wickelkopfes eine kontinuierliche Steigung ausgebildet. Dies ergibt sich dadurch, dass sich die Windungen zumindest nicht mehr so stark aufspreizen. Die Steigung ergibt sich durch eine radiale Betrachtung von Innen nach Außen.

Bei der Durchführung des Verfahrens wird insbesondere eine der beschriebenen Fertigungseinrichtungen verwendet.

Ein Stator einer elektrischen Maschine weist eine Spule auf, welche kreisbogenförmig und kreissehnenförmig vorgebogen ist. Bei der Fertigung des Stators wird also eine derartige vorgebogene bzw. vorgeformte Spule verwendet. Durch die Verwendung derartiger Spulen ergibt sich eine verbesserte Herstellung des Wickelkopfes der elektrischen Maschine. Zur Herstellung des Wickelkopfes werden die vorgebogenen (vorgeformten) Spulen gezogen. Zur Herstellung der elektrischen Maschine werden also insbesondere Spulen verwendet, welche nach einem der beschriebenen Verfahren vorgefertigt sind.

Die Erfindung sowie weitere vorteilhafte Ausgestaltungen der Erfindung werden anhand prinzipiell dargestellter Ausführungsbeispiele nachfolgend näher erläutert. Darin zeigen:
- FIG 1: eine elektrische Maschine;
- FIG 2: eine Spule welche mittels eines kreisförmigen Formkörpers vorgeformte ist;
- FIG 3: einen kreisförmigen Formkörper;
- FIG 4: eine Fertigungsvorrichtung;
- FIG 5: einen Formkörper mit segmentierter Form,
- FIG 6: eine Spule welche mittels eines Formkörpers mit segmentierter Form vorgeformte ist und
- FIG 7: eine weitere Spule welche mittels eines Formkörpers mit segmentierter Form vorgeformte ist.

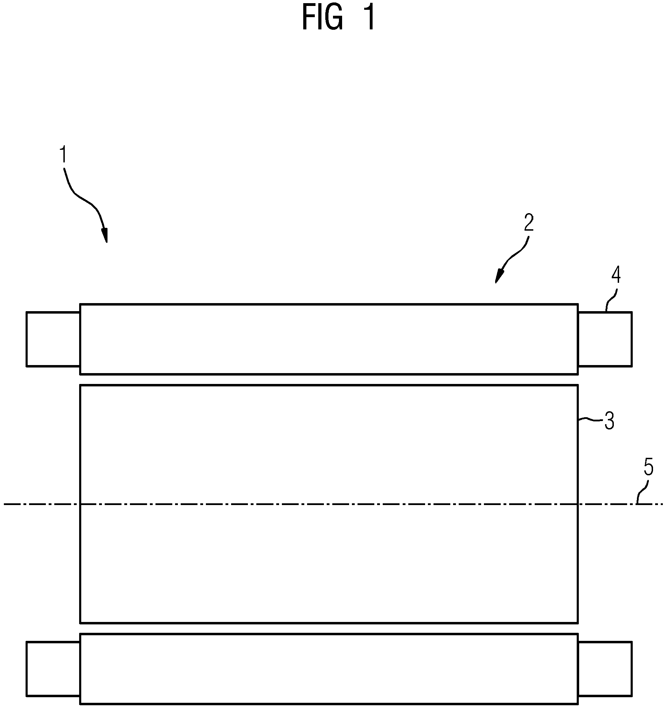

Die Darstellung nach Figur 1 zeigt eine elektrische Maschine 1 welche einen Stator 2 und einen Rotor 3 aufweist. Der Stator 2 weist Wickelköpfe 4 auf. Der Rotor 3 ist um eine Achse 5 drehbar gelagert.

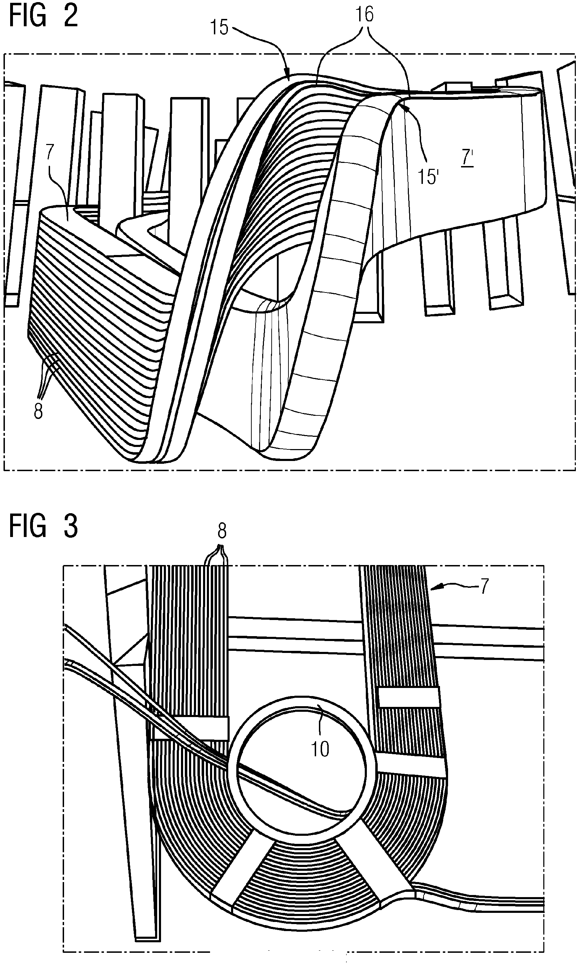

Die Darstellung nach Figur 2 zeigt Spulen 7, 7', welche der Ausbildung eines Wickelkopfes dienen. Die Spulen 7, 7' weisen Windungen 8 auf. Für die Windungen 8 werden insbesondere Bänder verwendet. Die Spule 7 weist noch keine Bandage auf. Die Spule 7' weist eine Bandage auf, ist also bandagiert. Durch das Ziehen der Spule 7, 7' zum Wickelkopf ergibt sich eine bauchige Auswölbung 15, 15' die es zu vermeiden gilt. Die Auswölbung 15, 15' ist auch durch den eingezeichneten Konturen 16 erkennbar. Mit Auswölbung ergibt sich auch eine Aufspreizung der Windungen 8 in diesem Bereich.

Die Darstellung nach Figur 3 zeigt symbolisiert, wie die Spulen 7, 7' nach Figur 1 vorgefertigt wurden. Figur 3 zeigt symbolisiert einen kreisrunden Formkörper 10. Um einen derartigen kreisrunden Formkörper 10 wird nach bekannter Weise die Spule 7 gebogen. Die Spule 7 wird um den Formkörper 10 gelenkt (umgelenkt).

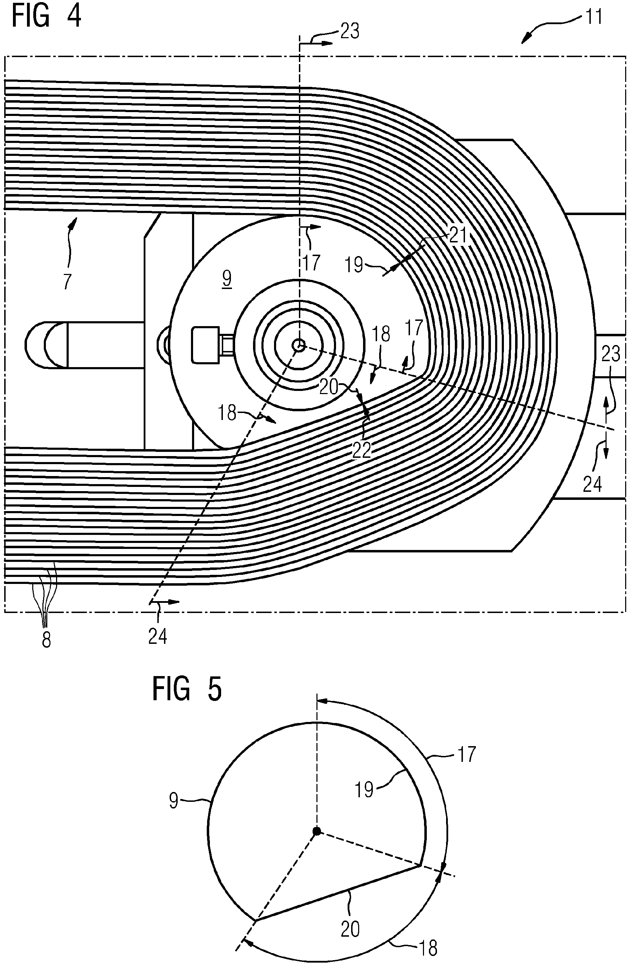

Die Darstellung nach Figur 4 zeigt im Gegensatz zu Figur 3 nunmehr das erfindungsgemäße Vorgehen bzw. den erfindungsgemäßen Formkörper 9. Dies trifft entsprechend auch auf Figur 5 zu. Der Formkörper 9 der Formkörper 9 weist einen Kreisbogen 19 und eine Kreissehne auf 20. Da die Spule 7 über den Formkörper 9 gebogen wird weist auch die Spule 7 einen korrespondierenden Kreisbogen 21 und eine korrespondierende Kreissehne 22 auf. Daraus ergeben sich für die Spule 7 ein erster Abschnitt 23 und ein zweiter Abschnitt 24 sowie für den Formkörper 9 eine erste Abschnitt 17 und ein zweiter Abschnitt 18.

Die Darstellung nach Figur 5 zeigt den Formkörper nach Figur 4 in schematisierter Form mit dem Kreisbogen 19 im ersten Abschnitt 17 und der Kreissehne 20 im zweiten Abschnitt 18. Der Kreisbogen 19 befindet sich in einem ersten Abschnitt 17, dem ersten Formkörper-Abschnitt. Die Kreissehne 20 befindet sich in einem zweiten Abschnitt 18, dem zweiten Formkörper-Abschnitt.

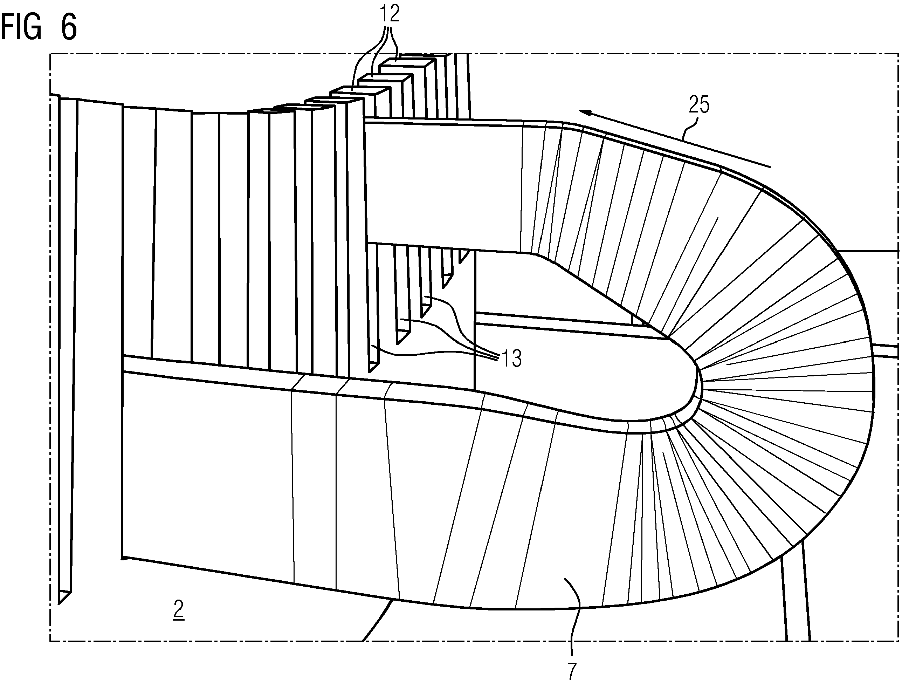

Die Darstellung nach Figur 6 zeigt eine Spule 7 welche bandagiert ist. Die Spule 7 ist in Nuten 13 gelegt, wobei die Nuten 13 durch Zähne 12 ausgebildet sind. Die Spule 7 nach Figur 6 ist mittels eines Formkörpers vorgeformt, welche eine Kreissehne und einen Kreisbogen aufweist.

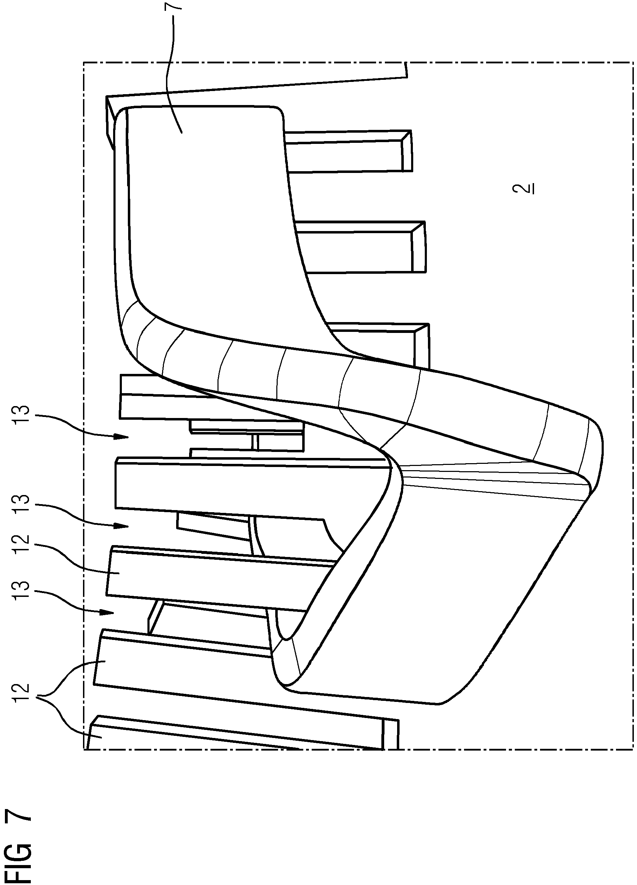

Die Darstellung nach Figur 7 zeigt die Spule 7 nach Figur 6 aus einer anderen Perspektive.

## Patentansprüche

1. Fertigungsvorrichtung (11) für eine Spule (7), zur Umlenkung einer Spule (7), wobei für die Umlenkung ein Formkörper (9) vorgesehen ist, wobei der Formkörper (9) einen ersten Abschnitt (17) aufweist, welcher einen Kreisbogen (19) darstellt und einen zweiten Abschnitt (18) aufweist, welche eine Kreissehne (20) darstellt.

2. Fertigungsvorrichtung (11) nach Anspruch 1, wobei der erste Abschnitt (17) zum Anlegen der Spule (7) vorgesehen ist und wobei der zweite Abschnitt (18) zum Anlegen der Spule (7) vorgesehen ist.

3. Verfahren zur Herstellung einer Spule (7), wobei die Spule (7) eine Vielzahl von Windungen (8) aufweist, wobei die Spule über einen Formkörper (9) gebogen wird, wobei ein erster Abschnitt (23) ausgebildet wird, welcher einen Kreisbogen (21) darstellt und ein zweiter Abschnitt (24) ausgebildet wird, welcher eine Kreissehne (22) darstellt.

4. Verfahren nach Anspruch 3, wobei der Formkörper (9) einen ersten Formkörper-Abschnitt (17) aufweist, welcher einen Kreisbogen (19) darstellt und einen zweiten Formkörper-Abschnitt (18) aufweist, welcher eine Kreissehne (20) darstellt.

5. Verfahren nach Anspruch 3 oder 4, wobei die Spule (7) gezogen wird, wobei die Spule (7) im zweiten Abschnitt (24) mit Kreissehnenform, Windungen (8) aufweist, deren Abstand zueinander kleiner ist als ein Abstand zueinander bei einer Kreisbogenform im zweiten Abschnitt.

6. Verfahren nach einem der Ansprüche 3 bis 5, wobei die Spule (7) durch das Ziehen im Bereich des Wickelkopfes eine kontinuierliche Steigung (25) ausbildet.

7. Verfahren nach einem der Ansprüche 3 bis 6, wobei eine Fertigungseinrichtung (11) nach einem der Ansprüche 1 oder 2 verwendet wird.

8. Stator (2) einer elektrischen Maschine (1), welcher eine Spule (7) aufweist, welche kreisbogenförmig und kreissehnenförmig vorgebogen ist.

9. Stator (2) nach Anspruch 8, wobei die Spule (7) nach einem Verfahren der Ansprüche 3 bis 7 hergestellt ist.
